# EUROPEAN PATENT APPLICATION

(11) **EP 4 848 457 A1**
(43) Date of publication of application: **02.12.2026**
(21) Application number: 25861674.7
(22) Date of filing: 04.06.2025
(51) Int. Cl.: H01M 50/502

(54) **BATTERY AND ELECTRIC APPARATUS**

(30) Priority: 11.03.2025 CN 202520421320 U
(71) Applicant: HUIZHOU EVE POWER CO., LTD, Huizhou, Guangdong 516039 (CN)
(72) Inventor: ZHANG, Hucheng, Huizhou, Guangdong 516039 (CN); LI, Renbing, Huizhou, Guangdong 516039 (CN); YAN, Bo, Huizhou, Guangdong 516039 (CN); HE, Wei, Huizhou, Guangdong 516039 (CN)
(74) Representative: Berggren Oy
(86) International application number: PCT/CN2025/099174
(87) International publication number: WO 2026/188667

(57) **Abstract**

A battery and an electrical device are provided by the present disclosure. The battery includes a casing, a connecting member, and a separation layer. The casing is formed with a mounting cavity and an inward retracted portion. The inward retracted portion is protruded toward an interior of the mounting cavity. The connecting member includes an electrode connecting member and a tab connecting member. The electrode connecting member is connected to the inward retracted portion. The tab connecting member is connected to the electrode connecting member and a tab of the battery. The tab connecting member includes a first connection surface facing the inward retracted portion. The separation layer is connected to the first connection surface. The first connection surface is configured to be separated from at least one of the electrode connecting member and the inward retracted portion by the separation layer. A ratio of a contact area between the separation layer and the first connection surface to an area of the first connection surface is a, where 0.2≤a≤0.85.

## Description

This application claims priority to and the benefit of Chinese Patent Application No. 202520421320.8, filed on March 11, 2025. The disclosure of which is incorporated herein by reference in its entirety.

### TECHNICAL FIELD

The present disclosure relates to the field of battery technologies, and in particular, to a battery and an electrical device.

### BACKGROUND

Batteries are widely used in fields such as energy storage systems, vehicles, and consumer electronics. A tab of the battery and a casing of the battery need to be connected together through a connection structure.

### SUMMARY

In the related art, stability of the connection between the tab of the battery and the casing of the battery needs to be improved.

In a first aspect, a battery is provided by the present disclosure. The battery includes:
a casing formed with a mounting cavity and an inward retracted portion, where the inward retracted portion is protruded toward an interior of the mounting cavity;
a connecting member including an electrode connecting member and a tab connecting member, where the electrode connecting member is connected to the inward retracted portion, the tab connecting member connects the electrode connecting member to a tab of the battery, and the tab connecting member comprises a first connection surface facing the inward retracted portion; and
a separation layer connected to the first connection surface, where the first connection surface is configured to be separated from at least one of the electrode connecting member and the inward retracted portion by the separation layer, and a ratio of a contact area between the separation layer and the first connection surface to an area of the first connection surface is a, where 0.2≤a≤0.85.

In a second aspect, an electrical device is provided by the present disclosure. The electrical device includes the above-described battery.

### BENEFICIAL EFFECTS

According to the battery provided by the present disclosure, the electrode connecting member and the tab connecting member are separated by the separator, so that a contact position between the electrode connecting member and the tab connecting member may be reduced, corrosion caused by direct contact between the electrode connecting member and a side of the tab connecting member facing the inward retracted portion is avoided, and connection stability between the tab connecting member and the electrode connecting member is improved, thereby improving connection stability between the tab and the casing.

The inward retracted portion and the tab connecting member are separated by the separator, so that corrosion caused by direct contact between the tab connecting member and the inward retracted portion may be avoided, and structural stability of the tab connecting member is improved, thereby further improving the connection stability between the tab and the casing.

### BRIEF DESCRIPTION OF THE DRAWINGS

FIG. 1 is a schematic view of a structure of a battery according to the embodiments of the present disclosure.
FIG. 2 is a first schematic view of a partial structure of a battery according to the embodiments of the present disclosure.
FIG. 3 is a schematic view of a structure of a battery according to the embodiments of the present disclosure, where a connecting member is electrically connected to a cover plate.
FIG. 4 is a second schematic view of a partial structure of a battery according to the embodiments of the present disclosure.
FIG. 5 is a third schematic view of a partial structure of a battery according to the embodiments of the present disclosure.
FIG. 6 is a fourth schematic view of a partial structure of a battery according to the embodiments of the present disclosure.

### DETAILED DESCRIPTION

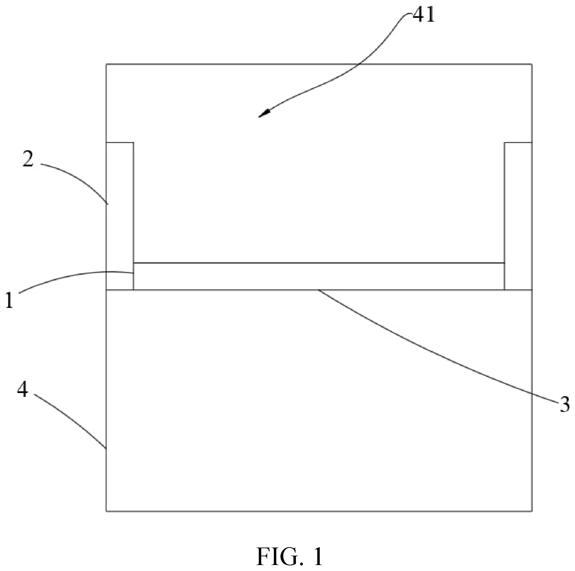

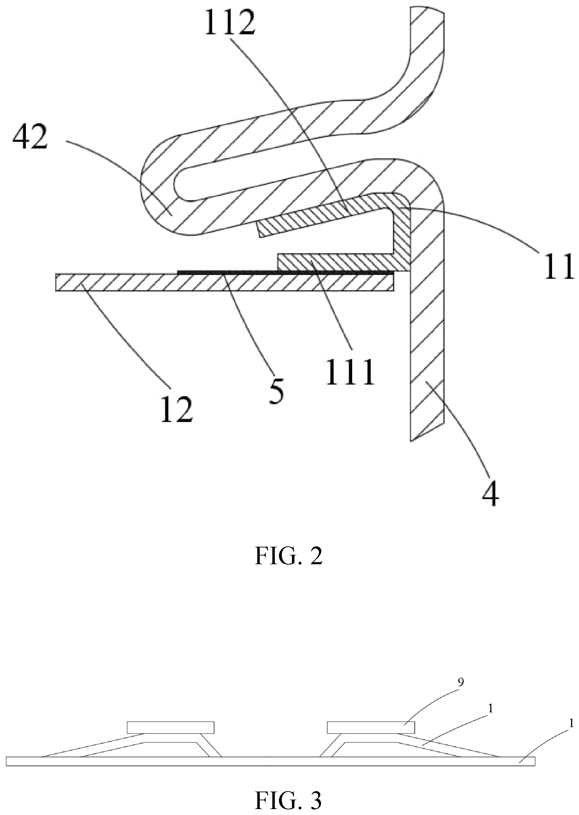

Embodiments of the present disclosure disclose a battery. Referring to FIG. 1 and FIG. 2, the battery includes a connecting member 1, a casing 4, and a separation layer 5.

The casing 4 is formed with a mounting cavity 41 and an inward retracted portion 42. The inward retracted portion 42 is protruded toward an interior of the mounting cavity 41. The connecting member 1 includes an electrode connecting member 11 and a tab connecting member 12. The electrode connecting member 11 is connected to the inward retracted portion 42. The tab connecting member 12 is connected to the electrode connecting member 11 and a tab of the battery. The tab connecting member 12 includes a first connection surface facing the inward retracted portion 42. The separation layer 5 is connected to the first connection surface. The first connection surface is configured to be separated from at least one of the electrode connecting member 11 and the inward retracted portion 42 by the separation layer 5. A ratio of a contact area between the separation layer 5 and the first connection surface to an area of the first connection surface is a, where 0.2≤a≤0.85.

According to the battery of the embodiments of the present disclosure, the electrode connecting member 11 and the tab connecting member 12 are separated by the separator, so that a contact position between the electrode connecting member 11 and the tab connecting member 12 may be reduced, corrosion caused by direct contact between the electrode connecting member 11 and a side of the tab connecting member 12 facing the inward retracted portion 42 is avoided, and connection stability between the tab connecting member 12 and the electrode connecting member 11 is improved, thereby improving connection stability between the tab and the casing 4.

The inward retracted portion 42 and the tab connecting member 12 are separated by the separator, so that corrosion caused by direct contact between the tab connecting member 12 and the inward retracted portion 42 may be avoided, and structural stability of the tab connecting member 12 is improved, thereby further improving the connection stability between the tab and the casing 4.

It may be understood that a surface of the separation layer 5 facing the first connection surface is connected to the first connection surface, and a portion of the first connection surface of the tab connecting member 12 connected to the separation layer 5 may be separated from the electrode connecting member 11 and/or the inward retracted portion 42. That is, the ratio of the contact area between the separation layer 5 and the first connection surface to the area of the first connection surface is related to the separation effect. In a case where the ratio of the contact area between the separation layer 5 and the first connection surface to the area of the first connection surface is less than 0.2, the tab connecting member 12 and at least one of the electrode connecting member 11 and the inward retracted portion 42 are difficult to be effectively separated by the separation layer 5. In a case where the ratio of the contact area between the separation layer 5 and the first connection surface to the area of the first connection surface is greater than 0.85, a coverage area of the separation layer 5 is too large to easily interfere with other structures of the battery. As such, in the present disclosure, the ratio of the contact area between the separation layer 5 and the first connection surface to the area of the first connection surface is set to range from 0.2 to 0.85, so as to ensure that the first connection surface is provided to be separated from at least one of the electrode connecting member 11 and the inward retracted portion 42 by the separation layer 5, and effectively prevent the separation layer 5 from interfering with other structures of the battery.

In some embodiments, the separation layer 5 is, for example, a nickel layer. It should be noted that a material of the separation layer 5 is mainly determined according to a material of the inward retracted portion 42 or a material of the electrode connecting member 11, and is not specifically nickel.

Exemplarily, the connecting member 1 is made of copper. After the connecting member 1 is plated with nickel as a whole, the connecting member 1 is cleaned by laser cleaning, mechanical polishing, chemical etching, or any other suitable methods to clean a non-nickel plated region.

In some embodiments, the separation layer 5 is connected to the tab connecting member 12 by, for example, electroplating. It should be noted that the separation layer 5 may also be connected to the tab connecting member 12 by welding or the like.

In some embodiments, referring to FIG. 1 and FIG. 2, the electrode connecting member 11 includes a first connecting section 111 and a second connecting section 112. The first connecting section 111 is connected to the tab connecting member 12. The second connecting section 112 is connected to the first connecting section 111 and the inward retracted portion 42.

It may be understood that the electrode connecting member 11 is divided into at least two sections, and the first connecting section 111 and the inward retracted portion 42 are connected by the second connecting section 112, so that the tab and the casing 4 may be electrically connected, and the structure is simple.

In some embodiments, a second end of the first connecting section 111 is protruded or bent relative to a first end of the first connecting section 111 along a direction away from the tab connecting member 12.

It may be understood that the second end of the first connecting section 111 is protruded or bent along the direction away from the tab connecting member 12, and the second connecting section 112 is connected to the second end of the first connecting section 111, so that the second connecting section 112 is protruded from the tab connecting member 12, which facilitates the connection between the second connecting section 112 and the casing 4.

In some embodiments, the first end of the first connecting section 111 is stacked on the tab connecting member 12.

In some embodiments, along an axial direction of the casing 4, an orthographic projection of the second connecting section 112 on an inner bottom wall of the casing 4 is coincided with an orthographic projection of the separation layer 5 on the inner bottom wall of the casing 4.

It may be understood that the orthographic projection of the second connecting section 112 on the inner bottom wall of the casing 4 is coincided with the orthographic projection of the separation layer 5 on the inner bottom wall of the casing 4. That is, along the axial direction of the casing 4, the separation layer 5 is located between the second connecting section 112 and the tab connecting member 12. The separation layer 5 may prevent the second connecting section 112 from contacting the tab connecting member 12, so that the contact position between the electrode connecting member 11 and the tab connecting member 12 may be reduced, the corrosion caused by direct contact between the electrode connecting member 11 and the side of the tab connecting member 12 facing the inward retracted portion 42 is avoided, and the connection stability between the tab connecting member 12 and the electrode connecting member 11 is improved, thereby further improving the connection stability between the tab and the casing 4.

In some embodiments, along the axial direction of the casing 4, the orthographic projection of the second connecting section 112 on the inner bottom wall of the casing 4 is within the orthographic projection of the separation layer 5 on the inner bottom wall of the casing 4.

It may be understood that the orthographic projection of the second connecting section 112 on the inner bottom wall of the casing 4 is within the orthographic projection of the separation layer 5 on the inner bottom wall of the casing 4. That is, along the axial direction of the casing 4, the separation layer 5 is located between the second connecting section 112 and the tab connecting member 12. The separation layer 5 may prevent the second connecting section 112 from contacting the tab connecting member 12, so that the contact position between the electrode connecting member 11 and the tab connecting member 12 may be reduced, the corrosion caused by direct contact between the electrode connecting member 11 and the side of the tab connecting member 12 facing the inward retracted portion 42 is avoided, and the connection stability between the tab connecting member 12 and the electrode connecting member 11 is improved, thereby further improving the connection stability between the tab and the casing 4.

In some embodiments, the material of the separation layer 5 is the same as a material of the second connecting section 112.

It may be understood that the material of the separation layer 5 and the material of the second connecting section 112 are designed to be the same, so that even if the second connecting section 112 is in contact with the separation layer 5, the corrosion between the separation layer 5 and the second connecting section 112 may be effectively prevented, which is conducive to improving the structural stability of the separation layer 5 and the second connecting section 112. In this way, the tab connecting member 12 and the second connecting section 112 may be stably separated by the separation layer 5, and the second connecting section 112 may be stably connected to the first connecting section 111 and the inward retracted portion 42.

In some embodiments, along the axial direction of the casing 4, an orthographic projection of the inward retracted portion 42 on the inner bottom wall of the casing 4 is coincided with the orthographic projection of the separation layer 5 on the inner bottom wall of the casing 4.

It may be understood that the orthographic projection of the inward retracted portion 42 on the inner bottom wall of the casing 4 is coincided with the orthographic projection of the separation layer 5 on the inner bottom wall of the casing 4. That is, along the axial direction of the casing 4, the separation layer 5 is located between the inward retracted portion 42 and the tab connecting member 12. The separation layer 5 may prevent the inward retracted portion 42 from contacting the tab connecting member 12, so that a contract position between the tab connecting member 12 and other components is reduced, corrosion caused by direct contact between the inward retracted portion 42 and the side of the tab connecting member 12 facing the inward retracted portion 42 is prevented, and the structural stability of the tab connecting member 12 is improved, thereby further improving the connection stability between the tab and the casing 4.

In some embodiments, along the axial direction of the casing 4, the orthographic projection of the inward retracted portion 42 on the inner bottom wall of the casing 4 is within the orthographic projection of the separation layer 5 on the inner bottom wall of the casing 4.

It may be understood that the orthographic projection of the inward retracted portion 42 on the inner bottom wall of the casing 4 is within the orthographic projection of the separation layer 5 on the inner bottom wall of the casing 4. That is, along the axial direction of the casing 4, the separation layer 5 is located between the inward retracted portion 42 and the tab connecting member 12. The separation layer 5 may prevent the inward retracted portion 42 from contacting the tab connecting member 12, so that a contact position between the tab connecting member 12 and other components is reduced, corrosion caused by direct contact between the inward retracted portion 42 and the side of the tab connecting member 12 facing the inward retracted portion 42 is prevented, and the structural stability of the tab connecting member 12 is improved, thereby further improving the connection stability between the tab and the casing 4.

In some embodiments, the material of the separation layer 5 is the same as the material of the inward retracted portion 42.

It may be understood that the material of the separation layer 5 and the material of the inward retracted portion 42 are designed to the same, so that even if the inward retracted portion 42 is in contact with the separation layer 5, the corrosion between the separation layer 5 and the inward retracted portion 42 may be effectively prevented, which is conducive to improving the structural stability of the separation layer 5 and the inward retracted portion 42, so that the tab connecting member 12 and the inward retracted portion 42 may be stably separated by the separation layer 5.

In some embodiments, referring to FIG. 1, the battery further includes a connecting portion 2. The connecting portion 2 is connected to the electrode connecting member 11 and the inward retracted portion 42. A material of the connecting portion is the same as the material of the inward retracted portion 42.

It may be understood that the electrode connecting member 11 and the inward retracted portion 42 are connected by the connecting portion 2, and the material of the connecting portion 2 and the material of the inward retracted portion 42 are the same, so that a connection position between the connecting portion 2 and the inward retracted portion 42 is not prone to corrosion. The connection stability between the connecting portion 2 and the inward retracted portion 42 is ensured, so that the inward retracted portion 42 and the electrode connecting member 11 may be stably connected by the connecting portion 2.

In some embodiments, the connecting portion 2 and the electrode connecting member 11 are integrally formed.

In some embodiments, the connecting portion 2 is connected to the electrode connecting member 11 by clamping, welding, or any other suitable manners.

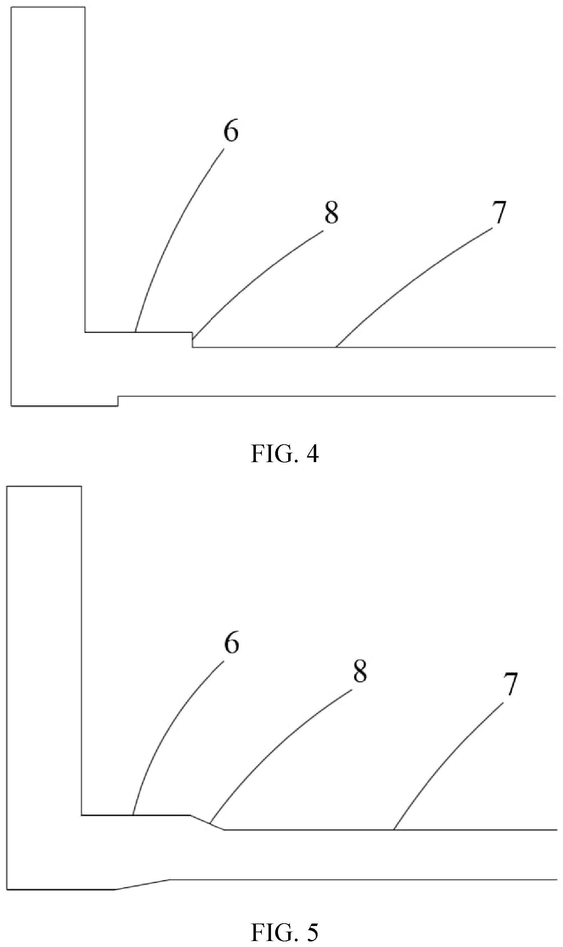

In some embodiments, referring to FIG. 4 and FIG. 5, the connecting member 1 includes a first surface 6 and a second surface 7. The first surface 6 is connected to the separation layer 5. The first surface 6 is connected to the second surface 7 through a second connection surface 8.

It may be understood that the first surface 6 is connected to the separation layer 5, and the first surface 6 may be separated from at least one of the electrode connecting member 11 and the inward retracted portion 42 by the separation layer 5. A contact position between the electrode connecting member 11 and the first surface 6 may be reduced by the separation layer 5, so that corrosion caused by direct contact between the first surface 6 and the electrode connecting member 11 is avoided, and the connection stability between the tab connecting member 12 and the electrode connecting member 11 is improved, thereby further improving connection stability between the tab and the casing 4. The electrode connecting member 11 is not easy to be in contact with the second surface 7 not covered by the separation layer 5. The inward retracted portion 42 and the first surface 6 are separated by the separator, so that corrosion caused by direct contact between the first surface 6 and the inward retracted portion 42 may be avoided, and the structural stability of the tab connecting member 12 is improved, thereby improving the connection stability between the tab and the casing 4.

In some embodiments, referring to FIG. 4, the second connection surface 8 is perpendicular to the first surface 6 and/or the second surface 7.

It may be understood that the second connection surface 8 is perpendicular relative to the first surface 6 and/or the second surface 7. That is, along the axial direction of the casing 4, the first surface 6 and the second surface 7 are located at different heights, so that a distance from the second surface 7 not covered by the separation layer 5 to the first surface 6 may be effectively increased.

In some embodiments, a perpendicular distance from the first surface 6 to the inner bottom wall of the casing 4 is greater than a perpendicular distance from the second surface 7 to the inner bottom wall of the casing 4, so that a distance from the second surface 7 not covered by the separation layer 5 and the inward retracted portion 42 to the electrode connecting member 11 may be increased, thereby effectively preventing the second surface 7 from contacting the inward retracted portion 42 and/or the electrode connecting member 11.

In some embodiments, referring to FIG. 5, the second connection surface 8 is disposed obliquely relative to the first surface 6.

It may be understood that the second connection surface 8 is disposed obliquely relative to the first surface 6, so that a connecting structure between the first surface 6 and the second surface 7 is an inclined structure, which facilitates the molding of the connecting member 1. Moreover, the second connection surface 8 is disposed obliquely, so that a radial distance from the first surface 6 to the second surface 7 may be effectively increased. That is, a distance from the second surface 7 not covered by the separation layer 5 to the electrode connecting member 11 and/or the inward retracted portion 42 may be effectively increased, so as to prevent the second surface 7 from contacting the electrode connecting member 11 and/or the inward retracted portion 42.

In some embodiments, referring to FIG. 5, the second connection surface 8 is disposed obliquely relative to the second surface 7.

It may be understood that the second connection surface 8 is disposed obliquely relative to the second surface 7, so that the connecting structure between the first surface 6 and the second surface 7 is an inclined structure, which facilitates the molding of the connecting member 1. Moreover, the second connection surface 8 is disposed obliquely, so that the radial distance from the first surface 6 to the second surface 7 may be effectively increased. That is, the distance from the second surface 7 not covered by the separation layer 5 to the electrode connecting member 11 and/or the inward retracted portion 42 may be effectively increased, so as to prevent the second surface 7 from contacting the electrode connecting member 11 and/or the inward retracted portion 42.

In some embodiments, the first surface 6 is located between the second connection surface 8 and an inner wall surface of the casing 4. That is, the first surface 6 is closer to the inward retracted portion 42 than the second surface 7.

In some embodiments, referring to FIG. 3, the battery further includes a cover plate 9. The connecting member 1 is electrically connected to the cover plate 9.

It may be understood that the casing 4 and the tab are connected by the connecting member 1, so that the battery may work normally, and the connecting member 1 is charged. The connecting member 1 is electrically connected to the cover plate 9, so that the cover plate 9 is also charged, thereby effectively preventing the cover plate 9 from being corroded, prolonging the service life of the cover plate 9, and improving the stability of the battery.

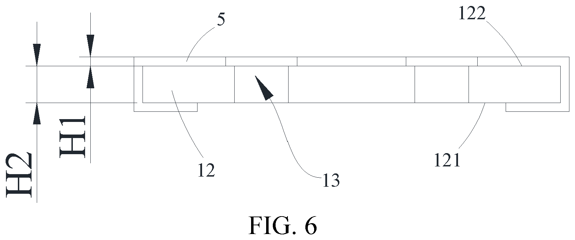

In some embodiments, referring to FIG. 6, a thickness of the separation layer 5 is H1, where 1 µm≤H1≤10 µm.

It may be understood that in a case where the thickness of the separation layer 5 is less than 1 µm, the separation layer 5 is easy to be damaged, so that the tab connecting member 12 and the inward retracted portion 42 are difficult to be effectively separated, and the tab connecting member 12 and the electrode connecting member 11 are difficult to be effectively separated. In a case where the thickness of the separation layer 5 is greater than 10 µm, the separation layer 5 has a relatively large thickness, which is likely to have a significant impact on the size of the battery. As such, in the present disclosure, the thickness of the separation layer 5 is set between 1 µm and 10 µm, so that at least one of the electrode connecting member 11 and the inward retracted portion 42 may be effectively separated from the tab connecting member 12, and impact on a size of the battery may be reduced.

In some embodiments, the connecting member 1 is formed with a through hole 13. Along the axial direction of the casing 4, an area of an orthographic projection of the through hole 13 on the inner bottom wall of the casing 4 is S1, and an area of an orthographic projection of the connecting member 1 on the inner bottom wall of the casing 4 is S2, where 0.2≤S1/S2≤0.85.

It may be understood that the through hole 13 is formed in the connecting member 1, which is not conducive to flow of an electrolyte.

It may be understood that in a case where a ratio of S1 to S2 is less than 0.2, the through hole 13 may be relatively small, which is not conducive to the flow of the electrolyte. In a case where the ratio of S1 to S2 is greater than 0.85, the through hole 13 may be relatively large, which easily affects the structural stability of the connecting member 1. As such, in the present disclosure, the ratio of S1 to S2 is set between 0.2 and 0.85, so that the impact on structural stability of the connecting member 1 is reduced while ensuring that the electrolyte may flow smoothly.

In some embodiments, referring to FIG. 6, along the axial direction of the casing 4, the thickness of the separation layer 5 is H1, and a thickness of the tab connecting member 12 is H2, where 0.05≤H1/(H1+H2)≤0.7.

It may be understood that a total thickness of the separation layer 5 and the tab connecting member 12 is H1+H2. In a case where a ratio of the thickness of the separation layer 5 to the total thickness is less than 0.05, it indicates that the thickness of the separation layer 5 is too low, the separation layer 5 is easy to be damaged, and the separation layer 5 is difficult to play an effective separation role. In a case where the ratio of the thickness of the separation layer 5 to the total thickness is greater than 0.7, the thickness of the separation layer 5 is too large, which easily has a great impact on the size of the battery. As such, in the present disclosure, the ratio of the thickness of the separation layer 5 to the total thickness is set between 0.05 and 0.7 µm, so that at least one of the electrode connecting member 11 and the inward retracted portion 42 may be effectively separated from the tab connecting member 12, and the impact on the size of the battery may be reduced.

In some embodiments, referring to FIG. 6, the tab connecting member 12 includes a sidewall surface, and a first surface 121 and a second surface 122 opposite to each other. The first surface 121 is located on a side of the tab connecting member 12 facing the tab. The second surface 122 is located on a side of the tab connecting member 12 away from the tab. A part of the first surface 121 is wrapped by the separation layer 5.

It may be understood that a part of the first surface 121 of the tab connecting member 12 is wrapped by the separation layer 5 to improve a wrapping degree of the separation layer 5 on the tab connecting member 12, so that the separation layer 5 may protect the tab connecting member 12, and the tab connecting member 12 is not easily oxidized and corroded, thereby ensuring the structural stability of the tab connecting member 12, preventing the electrical performance of the tab connecting member 12 from being reduced, and improving the structural stability of a current collector plate.

The embodiments of the present disclosure further disclose an electrical device, including the above-described battery.

According to the electrical device of the embodiments of the present disclosure, the electrode connecting member 11 and the tab connecting member 12 are separated by the separator, so that the contact position between the electrode connecting member 11 and the tab connecting member 12 may be reduced, the corrosion caused by direct contact between the electrode connecting member 11 and the side of the tab connecting member 12 facing the inward retracted portion 42 is avoided, and the connection stability between the tab connecting member 12 and the electrode connecting member 11 is improved, thereby improving the connection stability between the tab and the casing 4.

The inward retracted portion 42 and the tab connecting member 12 are separated by the separator, so that the corrosion caused by direct contact between the tab connecting member 12 and the inward retracted portion 42 may be avoided, and the structural stability of the tab connecting member 12 is improved, thereby further improving the connection stability between the tab and the casing 4.

It should be noted that the electrical device may be a vehicle, an aircraft, or a household appliance. It should be noted that the foregoing is merely an example of the electrical device, and does not impose a special limitation on the electrical device.

## Claims

1. A battery, comprising:
a casing formed with a mounting cavity and an inward retracted portion, wherein the inward retracted portion is protruded toward an interior of the mounting cavity;
a connecting member comprising an electrode connecting member and a tab connecting member, wherein the electrode connecting member is connected to the inward retracted portion, the tab connecting member connects the electrode connecting member to a tab of the battery, and the tab connecting member comprises a first connection surface facing the inward retracted portion; and
a separation layer connected to the first connection surface, wherein the first connection surface is configured to be separated from at least one of the electrode connecting member and the inward retracted portion by the separation layer, and a ratio of a contact area between the separation layer and the first connection surface to an area of the first connection surface is a, where 0.2≤a≤0.85.

2. The battery according to claim 1, wherein the electrode connecting member comprises a first connecting section and a second connecting section, the first connecting section is connected to the tab connecting member, and the second connecting section is connected to the first connecting section and the inward retracted portion.

3. The battery according to claim 2, wherein along an axial direction of the casing, an orthographic projection of the second connecting section on an inner bottom wall of the casing is coincided with an orthographic projection of the separation layer on the inner bottom wall of the casing.

4. The battery according to claim 2, wherein along an axial direction of the casing, an orthographic projection of the second connecting section on an inner bottom wall of the casing is within an orthographic projection of the separation layer on the inner bottom wall of the casing.

5. The battery according to claim 2, wherein a material of the separation layer is the same as a material of the second connecting section.

6. The battery according to claim 1, wherein along an axial direction of the casing, an orthographic projection of the inward retracted portion on an inner bottom wall of the casing is coincided with an orthographic projection of the separation layer on the inner bottom wall of the casing.

7. The battery according to claim 1, wherein along an axial direction of the casing, an orthographic projection of the inward retracted portion on an inner bottom wall of the casing is within an orthographic projection of the separation layer on the inner bottom wall of the casing.

8. The battery according to claim 6 or 7, wherein a material of the separation layer is the same as a material of the inward retracted portion.

9. The battery according to any one of claims 1 to 7, wherein the battery further comprises a connecting portion, the connecting portion is connected to the electrode connecting member and the inward retracted portion, and a material of the connecting portion is the same as a material of the inward retracted portion.

10. The battery according to any one of claims 1 to 7, wherein the connecting member comprises a first surface and a second surface, the first surface is connected to the separation layer, and the first surface is connected to the second surface through a second connection surface;
wherein the second connection surface is perpendicular to the first surface and/or the second surface; or
wherein the second connection surface is disposed obliquely relative to the first surface, and/or the second connection surface is disposed obliquely relative to the second surface.

11. The battery according to any one of claims 1 to 7, wherein the battery further comprises a cover plate, and the connecting member is electrically connected to the cover plate.

12. The battery according to any one of claims 1 to 7, wherein a thickness of the separation layer is H1, where 1 µm≤H1≤10 µm; and/or
wherein along an axial direction of the casing, the thickness of the separation layer is H1, and a thickness of the tab connecting member is H2, where 0.05≤H1/(H1+H2)≤0.7; and/or
wherein the connecting member is formed with a through hole, and wherein along the axial direction of the casing, an area of an orthographic projection of the through hole on an inner bottom wall of the casing is S1, and an area of an orthographic projection of the connecting member on the inner bottom wall of the casing is S2, where 0.2≤S1/S2≤0.85.

13. The battery according to any one of claims 1 to 7, wherein the tab connecting member comprises a sidewall surface, and a first surface and a second surface opposite to each other, the first surface is located on a side of the tab connecting member facing the tab, the second surface is located on a side of the tab connecting member away from the tab, and a part of the first surface is wrapped by the separation layer.

14. An electrical device, comprising the battery according to any one of claims 1 to 13.
